# EUROPÄISCHE PATENTANMELDUNG

(11) **EP 4 477 935 A1**
(43) Veröffentlichungstag der Anmeldung: **18.12.2024**
(21) Anmeldenummer: 24182671.8
(22) Anmeldetag: 17.06.2024
(51) Int. Cl.: F16L 57/00, H02G 3/04, F16J 3/04

(54) **MANSCHETTE MIT TÜLLENVERBAND, MANSCHETTENANORDNUNG SOWIE DEREN VERWENDUNG**

(30) Priorität: 15.06.2023 EP 23179600
(71) Anmelder: DOYMA GmbH & Co, 28876 Oyten (DE)
(72) Erfinder: Meinders, Jan, 28879 Grasberg (DE)
(74) Vertreter: Eisenführ Speiser

(57) **Zusammenfassung**

Die Erfindung betrifft eine Manschette (1,1') zum Abdichten einer Leitungsanordnung gegenüber einem Mantel (101), durch welches die Leitungsanordnung hindurchgeführt ist, wobei die Manschette (1) einen ersten Dichtabschnitt (5) aufweist, der zur fluiddichten, endseitigen Anlage an dem Mantel (101) eingerichtet ist, und mehrere Tüllen (7a,b; 7a,b,c) aufweist, die jeweils einen zweiten Dichtabschnitt (12) aufweisen, der dazu eingerichtet ist, fluiddicht an einer Leitung der Leitungsanordnung anzuliegen. Es wird vorgeschlagen, dass einige oder sämtliche der Tüllen (7a,b; 7a,b,c) als Verbund (7) ausgebildet sind, wobei die Tüllen (7a,b; 7a,b,c) in einem Verbund (7) jeweils aneinander angeformt sind.

## Beschreibung

Die vorliegende Erfindung betrifft eine Manschette, insbesondere Endmanschette, zum Abdichten einer Leitungsanordnung gegenüber einem Mantel, durch welches die Leitungsanordnung hindurchgeführt ist, wobei die Manschette einen ersten Dichtabschnitt aufweist, der zur fluiddichten, endseitigen Anlage an dem Mantel eingerichtet ist, und mehrere Tüllen aufweist, die jeweils einen zweiten Dichtabschnitt aufweisen, der dazu eingerichtet ist, fluiddicht an einer Medienleitung der Leitungsanordnung anzuliegen.

Manschetten der vorstehend bezeichneten Art sind allgemein bekannt. Sie werden bei der Installation von Leitungen in Bauwerken dazu verwendet, den Mantel, welches die Leitung führt, an dessen Ende gegenüber der hindurchgeführten Leitung abzudichten. Hierfür ist es erforderlich, dass die Manschette einerseits dicht gegenüber dem Mantel ist, und andererseits dicht gegenüber der hindurchgeführten Leitungsanordnung.

Unter einer Leitungsanordnung wird im Rahmen der Erfindung eine Anordnung von einer oder mehreren Leitungen verstanden, wobei die Leitungen denselben oder unterschiedliche Durchmesser aufweisen können. Es sind Manschetten bekannt, die nur eine einzige Tülle aufweisen, wobei diese Manschetten bisweilen auch als Endtüllen bezeichnet werden, genauso wie Manschetten bekannt sind, die mehrere Tüllen aufweisen.

Im Stand der Technik sind bislang bei der Verwendung mehrerer Tüllen an einer Manschette die Tüllen jeweils als individuelle zylindrische oder konische Segmente ausgebildet, die zueinander beabstandet, gleichmäßig oder ungleichmäßig über den Umfang verteilt, an der Manschette angeordnet sind.

Wenngleich die bekannten Manschetten ihre Dichtungsaufgabe grundsätzlich zufriedenstellend verrichten, so hat sich in der Praxis gezeigt, dass gerade zum Abdichten einer größeren Anzahl von Leitungen wegen des notwendigen radialen Raumbedarfs der einzelnen Tüllen vergleichsweise große Mäntel verwendet werden müssen, um mehrere Leitungen durchzuführen. Das Verhältnis zwischen Durchmesser und Anzahl der Tüllen pro Manschette einerseits und Durchmesser des von der Manschette endseitig abgedichteten Mantels andererseits sind als verbesserungswürdig angesehen worden.

Demzufolge lag der vorliegenden Erfindung die Aufgabe zugrunde, eine Manschette der eingangs bezeichneten Art dahingehend weiterzubilden, dass die vorstehend beschriebenen Nachteile möglichst weitgehend überwunden werden. Insbesondere lag der Erfindung die Aufgabe zugrunde, eine Manschette der vorstehend bezeichneten Art dahingehend weiterzuentwickeln, dass im Verhältnis zum Durchmesser des Mantels eine möglichst hohe Anzahl an Tüllen an der Manschette angeordnet werden können und/oder, dass die Tüllen der Manschette möglichst große Leitungsdurchmesser aufnehmen können.

Die Erfindung löst die ihr zugrundeliegende Aufgabe mit einer Manschette nach Anspruch 1. Insbesondere schlägt die Erfindung vor, dass bei der Manschette einige oder sämtliche der Tüllen als Verbund ausgebildet sind, wobei die Tüllen in einem Verbund jeweils aneinander angeformt sind. Die Erfindung macht sich die Erkenntnis zunutze, dass ein fluiddichtes Anliegen an die durchzuführende Leitung an einer jeweiligen Tülle auch noch möglich ist, wenn die Tülle nicht vollständig umlaufend als eigenständiger Zylinder oder Kegelkörper ausgebildet wird, sondern wenn die Tüllen derart aneinander angenähert sind, dass sie mit ihrer äußeren Kontur ineinander übergehen. Dies wird dadurch erreicht, dass die Tüllen als Verbund ausgebildet werden, wobei die Tüllen in dem Verbund aneinander angeformt sind. Jede der Tüllen ist zur Aufnahme einer Leitung eingerichtet, die äußere Kontur der Tüllen geht allerdings ineinander über. Auf diese Weise können mehr Tüllen als zuvor an einer Manschette angeordnet werden und/oder die Tüllen können zur Aufnahme größerer Leitungsdurchmesser ausgebildet werden als zuvor.

Unter einer Leitung werden erfindungsgemäß Medienleitungen, also Leitungen zum Transport von gasförmigen oder flüssigen Fluiden, sowie von fließ- oder schüttfähigen Stoffen, und von ein- oder mehrphasigen Stoffgemischen verstanden, sowie Leitungen zur Übertragung elektrischer Leistung und/oder zur elektrischen oder nichtelektrischen Übertragung von Daten, beispielsweise elektrische oder optische Signalleitungen.

Unter einem Mantel ist erfindungsgemäß ein Rohr, insbesondere Wellrohr, oder ein Schlauch zu verstehen, mit einem inneren Hohlvolumen zur Aufnahme einer oder mehrerer Leitungen.

In bevorzugten Ausführungsformen weist die Manschette zwei, drei, vier oder mehr als vier in einem Verbund ausgebildete Tüllen auf, wobei zumindest zwei Tüllen im Verbund ausgebildet sind, und vorzugsweise sämtliche Tüllen in einem oder mehreren Verbünden ausgebildet sind, wobei jeweils in einem Verbund mindestens zwei Tüllen aneinander angeformt sind, und wobei vorzugsweise sämtliche Tüllen in einem Verbund aneinander angeformt sind, derart, dass jeweils unmittelbar benachbarte Tüllen mindestens aneinander angeformt sind.

In einer weiteren bevorzugten Ausführungsform sind der erste Dichtabschnitt und die zweiten Dichtabschnitte des Verbunds axial zueinander beabstandet. Die Axialrichtung ist hierbei die Erstreckungsrichtung des Mantels in dem ersten Dichtabschnitt, welche vorzugsweise parallel zu der Erstreckungsrichtung der Leitungen in den zweiten Dichtabschnitten ist. Aufgrund einer elastischen Ausbildung der Manschette insgesamt kann es im montierten Zustand gleichwohl zu Abweichungen der Erstreckungsrichtungen der Leitung relativ zum Mantel kommen. Die axiale Beabstandung der beiden Dichtabschnitte der Manschette zueinander wird vorzugsweise dadurch erreicht, dass der erste Abschnitt an einem ersten axialen Ende der Manschette ausgebildet ist, während die zweiten Dichtabschnitte an einem gegenüberliegenden zweiten Ende in axialer Richtung der Manschette ausgebildet sind.

In einer weiteren bevorzugten Ausführungsform weist jede der Tüllen ein inneres Hohlvolumen zur Aufnahme einer Leitung auf, wobei die Hohlvolumina benachbarter Tüllen jeweils mittels einer gemeinsamen Trennwand voneinander getrennt sind. Dadurch, dass sich jeweils benachbarte Tüllen eine Trennwand gewissermaßen teilen, kann bei unverändertem Durchmesser der Manschette, der im Wesentlichen eine Funktion des aufzunehmenden und abzudichtenden Mantels ist, eine größere Anzahl von Tüllen untergebracht werden und/oder ein größerer Durchmesser der jeweiligen einzelnen Tüllen, da nicht für jede Tülle ein vollständig umlaufender Körper artikuliert werden muss.

In einer weiteren bevorzugten Ausführungsform weisen die Tüllen jeweils eine geschlossene Tüllenhaut auf, welche dazu eingerichtet ist, mittels der Leitung oder einem geeigneten Werkzeug durchdrungen zu werden, und sich vorzugsweise nach erfolgtem Durchdringen an die Leitung anzulegen. Die Tüllenhaut ist mithin vorzugsweise im zweiten Dichtabschnitt angeordnet und bildet im durchdrungenen Zustand den zweiten Dichtabschnitt aus. Durch das Verwenden der Tüllenhaut ist es auch möglich, die Manschette nur partiell zu belegen, eine oder mehrere Tüllen mit anderen Worten also undurchdrungen zu lassen, oder die Manschette komplett undurchdrungen als Blinddeckel zu verwenden.

In alternativen bevorzugten Ausführungsformen weisen die Tüllen anstelle der Tüllenhaut eine vorgeformte Ausnehmung zur Aufnahme jeweils einer Leitung mit vorbestimmtem Durchmesser auf, die dazu eingerichtet ist, sich in eingeführtem Zustand der Leitung dichtend an der Leitung anzulegen.

In einer weiteren bevorzugten Ausführungsform weist der erste Dichtabschnitt eine Anzahl, vorzugsweise Mehrzahl, innenseitig angeordneter Rippen auf, die dazu eingerichtet sind, den Mantel kraft- und/oder formschlüssig zu halten.

Die rippenartige Form der Vorsprünge ist dabei eines mehrerer bevorzugter Beispiele. In alternativen, ebenfalls bevorzugten Ausführungsformen weist der erste Dichtabschnitt eine Anzahl, vorzugsweise Mehrzahl, innenseitig angeordneter, in Umfangsrichtung verteilter Vorsprünge in Form von Steinen oder Warzen auf, die dazu eingerichtet sind, den Mantel kraft- und/oder formschlüssig zu halten.

In einer weiteren bevorzugten Ausführungsform weist der erste Dichtabschnitt einen außenseitigen Spannabschnitt zur Aufnahme einer Spannvorrichtung auf. Der erste Dichtabschnitt weist vorzugsweise eine oder mehrere außenseitig angeordnete in Umfangsrichtung verlaufende Erhebungen auf, die den Spannabschnitt definieren. Wird nur eine Erhebung verwendet, markiert sie vorzugsweise eine Anlageschulter für die Spannvorrichtung. Werden mehrere Erhebungen verwendet, markieren sie vorzugsweise zwischen sich den Spannabschnitt. Die Halte- und/oder Dichtwirkung der Manschette wird vorzugsweise mittels Anlegen einer oder mehrerer Spannvorrichtungen, am äußeren Umfang der Manschette im Bereich des ersten Dichtabschnittes erhöht. Als Spannvorrichtung können beispielsweise Spannschellen, Kabelbinder, oder dergleichen verwendet werden.

Vorzugsweise ist der Mantel als Wellrohr mit einer Mehrzahl aufeinanderfolgender Vorsprünge mit dazwischen angeordneten Vertiefungen ausgebildet, wobei benachbarte Vertiefungen jeweils einen Abstand Av zueinander einnehmen.

Die Rippen der Manschette weisen vorzugsweise einen zu dem Abstand der Vertiefungen des Mantels korrespondierenden Abstand A_{R} zueinander auf. Auf diese Weise ist der erste Dichtabschnitt der Manschette dazu eingerichtet, mit seinen Rippen in die Vertiefungen des Mantels einzugreifen. Hierdurch wird die Manschette verliersicher am Mantel gehalten. Der Eingriff gelingt auch noch dann, wenn A_{V} und A_{R} nicht exakt übereinstimmen, wobei vorzugsweise die Breite der Rippen geringer ist als die Breite der Vertiefungen, was in einer bevorzugten Ausführungsform vorgeschlagen wird.

In einer alternativen bevorzugten Ausführungsform weisen die Rippen einen Abstand auf, der mit einer Summe von Abständen mehrerer Vertiefungen korrespondiert. Das können untereinander dieselben oder abweichende Abstände sein. Mit anderen greifen die Rippen dann nicht in direkt benachbarte Vertiefungen ein, sondern es werden eine oder mehrere Vertiefungen ausgelassen.

Die Erfindung wurde vorstehend unter anderem hinsichtlich der Eignung der erfindungsgemäßen Manschette zum Abdichten eines Endes eines Wellrohrs beschrieben. In einem weiteren Aspekt ist die Manschette aber in bevorzugten Ausführungsformen alternativ oder zusätzlich dazu geeignet, mit einem Mantel in Wechselwirkung zu treten, welcher als Glattrohr mit einem Endabschnitt und einer dort außenseitig ausgebildeten Vertiefung ausgebildet ist, wobei die Vertiefung zur Aufnahme einer oder mehrerer Rippen oder Vorsprünge ausgebildet ist. Die Erfindung macht sich diesbezüglich dieselben Vorteile und Erwägungen zunutze wie die weiter oben beschriebene Manschette. Bevorzugte Ausführungsformen jener Manschette sind somit zugleich auch bevorzugte Ausführungsformen dieser Manschette, so dass zur Vermeidung von Wiederholungen diesbezüglich auf die obigen Ausführungen verwiesen wird.

Die Erfindung wurde ferner vorstehend unter anderem hinsichtlich der Ausbildung der erfindungsgemäßen Manschette mit innenseitigen Rippen oder Vorsprüngen beschrieben. Es ist in einem weiteren Aspekt auch bevorzugt, dass nicht der Mantel, sondern der erste Dichtabschnitt eine Anzahl, vorzugsweise Mehrzahl, innenseitig angeordneter Vertiefungen aufweist, die dazu eingerichtet sind, den Mantel kraft- und/oder formschlüssig zu halten.

In diesem Aspekt ist vorzugsweise der Mantel mit einem Endabschnitt und einer dort außenseitig ausgebildeten Vertiefung ausgebildet, oder mit einer Mehrzahl außenseitiger aufeinanderfolgender Vorsprünge mit einer oder mehreren dazwischen angeordneten Vertiefungen, wobei benachbarte Vertiefungen jeweils einen Abstand zueinander einnehmen, wobei vorzugsweise die Vertiefung oder Vertiefungen zur Aufnahme einer oder mehrerer Rippen oder Vorsprünge ausgebildet ist oder sind, und/oder wobei vorzugsweise die Vertiefungen einen Abstand aufweisen, der mit einer Summe von Abständen mehrerer Vorsprünge korrespondiert. Die hiermit verbundenen Vorteile und bevorzugten Ausführungsformen entsprechen den weiter oben genannten Ausführungen, wobei lediglich die Zuordnung von Vorsprüngen und Vertiefungen zu den Bauteilen Manschette einerseits und Mantel andererseits vertauscht ist. Es wird wiederum zur Vermeidung von Wiederholungen auf die obigen Ausführungen verwiesen.

In einer weiteren bevorzugten Ausführungsform sind die Tüllen derart aneinander angeformt, dass ihre Außenkontur stetig in die Außenkontur einer benachbarten Tülle übergeht. Unter stetig wird erfindungsgemäß ein knickfreier und/oder sprungfreier Übergang verstanden, der aufgrund der Knick- und/oder Sprungfreiheit zu einem günstigen Verformungsverhalten führt. Eine Tangentenstetigkeit oder Stetigkeit der Krümmung im mathematischen Sinne ist optional möglich, aber nicht zwingend erforderlich.

In einer weiteren bevorzugten Ausführungsform weist der Verbund der Tüllen eine alle Tüllen umschließende Umfangsfläche auf, welche jeweils im Bereich eines Übergangs von der Außenkontur einer Tülle zu der Außenkontur einer anderen Tülle einen konkaven Flächenabschnitt aufweist. Die Außenkonturen der Tülle benachbart zu dem Bereich des Übergangs sind vorzugsweise als konvexe Flächenabschnitte ausgebildet. Der stetige Übergang der Außenkonturen der Tüllen wird in dieser Ausgestaltung vorzugsweise direkt mittels der konkaven Flächenabschnitte herbeigeführt, wobei die konkaven Flächenabschnitte zu diesem Zweck ihrerseits stetig in die benachbarten konvexen Flächenabschnitte übergehen.

Vorzugsweise erstreckt sich in einer solchen Ausführungsform bei Verwendung einer geraden Anzahl von Tüllen die gemeinsame Trennwand zwischen zwei benachbarten Tüllen zwischen zwei konkaven Flächenabschnitten. Analog erstreckt sich vorzugsweise bei Verwendung einer ungeraden Anzahl von Tüllen die gemeinsame Trennwand zwischen einem konkaven Flächenabschnitt an einem ersten Ende und einem Hohlvolumen einer Tülle des Verbunds an einem zweiten Ende.

Hierdurch ist in beiden Fällen die Länge der Trennwand in einer Ebene parallel zu der Längsachse der Manschette, insbesondere koaxial mit der Längsachse der Manschette, verkürzt, was zu einer besseren Stabilität und besseren Verformungsverhalten der Manschette im Bereich des Tüllenverbunds führt.

In einer weiteren bevorzugten Ausführungsform weist der zweite Dichtabschnitt jeweils eine umlaufende Dichtwulst auf, die dazu eingerichtet ist, sich nach Durchdringen der Tülle fluiddicht an die Leitung anzulegen.

Die Erfindung ist vorstehend anhand eines ersten Aspekts unter Bezugnahme auf eine Manschette beschrieben worden. In einem zweiten Aspekt betrifft die Erfindung eine Manschettenanordnung zum Führen einer Leitungsanordnung durch einen Mantel und eine Manschette hindurch, umfassend einen Mantel und eine die Leitung gegenüber dem Mantel abdichtende Manschette.

Die Erfindung löst in diesem Aspekt die eingangs bezeichnete Aufgabe ebenfalls, indem die Manschette nach einer der vorstehend beschriebenen bevorzugten Ausführungsformen ausgebildet ist.

Die Erfindung macht sich hinsichtlich der Manschettenanordnung dieselben Vorteile und Erkenntnisse zunutze wie die Manschette gemäß dem ersten Aspekt.

Bevorzugte Ausführungsformen der Manschette gemäß dem ersten Aspekt sind zugleich bevorzugte Ausführungsformen der Manschettenanordnung des zweiten Aspekts und umgekehrt, weswegen zur Vermeidung von Wiederholungen diesbezüglich auf die obigen Ausführungen verwiesen wird.

In einem dritten Aspekt betrifft die Erfindung eine Verwendung einer Manschette und/oder einer Manschettenanordnung zum Führen von Leitungen in einem Leitungssystem für eines der folgenden:
Wärmepumpe,
Klimaanlage,
Nah- oder Fernwärme,
Heizung,
Kabelbündel, insbesondere Strom-, elektrisches Daten- oder Glasfaserkabelbündel, oder einer Mischkonfektion aus mehreren verschiedenen Leitungen, insbesondere verschiedenen Medien- oder Datenleitungen.

Die Erfindung löst in dem dritten Aspekt die eingangs bezeichnete Aufgabe, indem die Manschette und/oder die Manschettenanordnung nach einer der vorstehend beschriebenen bevorzugten Ausführungsformen ausgebildet ist. Die Erfindung macht sich im dritten Aspekt dieselben Vorteile und Erkenntnisse zunutze wie die Manschette des ersten Aspekts und die Manschettenanordnung des zweiten Aspekts.

Bevorzugte Ausführungsformen des ersten Aspekts und des zweiten Aspekts sind zugleich bevorzugte Ausführungsformen der Verwendung gemäß dem dritten Aspekt und umgekehrt, weswegen wiederum zur Vermeidung von Wiederholungen auf die vorstehenden Ausführungen verwiesen wird.

Die Manschette und die Manschettenanordnung der oben beschriebenen Aspekte sind hinsichtlich ihrer Eignung beschrieben worden, im ersten Dichtabschnitt gegenüber einem Mantel, etwa einem Wellrohr, abzudichten. Es soll indes verstanden werden, und ist in einem weiteren Aspekt auch vorgesehen, dass die Manschette der obigen Aspekte zur Verwendung bei einem Abdichten gegenüber anderen zylindrischen Bauteilen eingerichtet und vorgesehen ist. So ist erfindungsgemäß ferner die Verwendung der Manschette der oben beschriebenen bevorzugten Ausführungsformen zum Abdichten im ersten Dichtabschnitt gegenüber einem korrespondierend ausgebildeten Anschlussstutzen vorgesehen. Unter einer korrespondierenden Ausbildung ist hierbei zu verstehen, dass der Anschlussstutzen die gleichen Strukturmerkmale zum Anliegen und zur kraft- und/oder formschlüssigen Halteverbindung aufweist wie die oben beschriebenen Mäntel. Es wird auch diesbezüglich zur Vermeidung von Wiederholungen auf die obigen Ausführungen verwiesen.

Die Erfindung wird nachfolgend unter Bezugnahme auf die beigefügten Figuren anhand bevorzugter Ausführungsbeispiele näher beschrieben. Hierbei zeigen:
- Fig. 1: eine schematische räumliche Außenansicht einer Manschette gemäß einem ersten bevorzugten Ausführungsbeispiel,
- Fig. 2: eine Schnittdarstellung der Manschette gemäß Fig. 1,
- Fig. 3.: eine schematische räumliche Außenansicht einer Manschette gemäß einem zweiten bevorzugten Ausführungsbeispiel,
- Fig. 4: eine Schnittdarstellung der Manschette gemäß Fig. 3,
- Fig. 5: eine schematische Außenansicht der Manschette gemäß den Figuren 3 und 4 im montierten Zustand, und
- Fig. 6: eine schematische Schnittansicht der Anordnung gemäß Fig. 5.

In den Figuren werden für beide bevorzugten Ausführungsbeispiele für funktional identische oder ähnliche Bauteile dieselben Bezugszeichen verwendet, sofern für die mit diesen Bezugszeichen versehenen Elemente nichts Entgegenstehendes beschrieben ist. Daher gelten auch für diejenigen Figuren, zu denen die Bezugszeichen nicht erneut erläutert werden, die Erläuterungen zu den übrigen Figuren im Wege des Verweises.

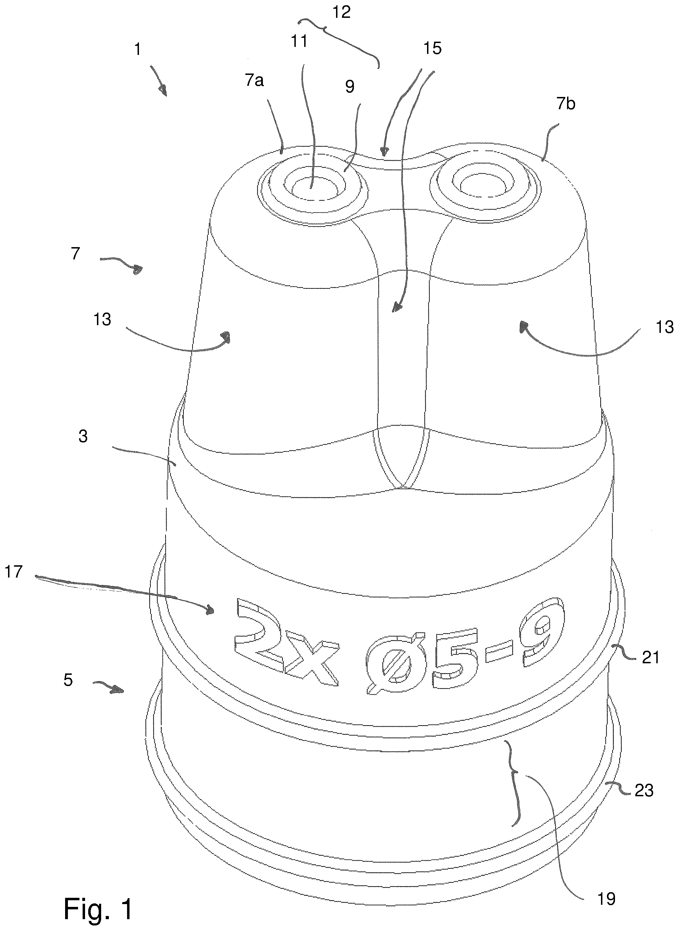

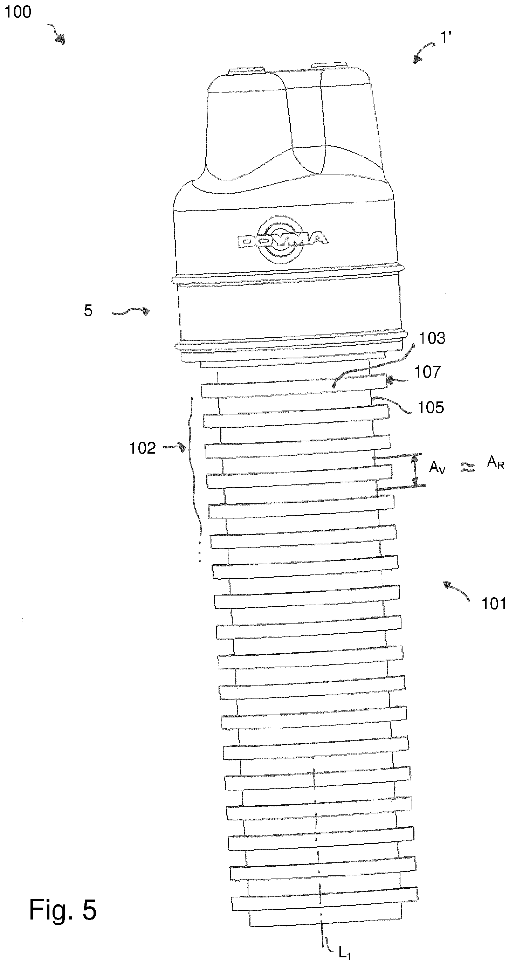

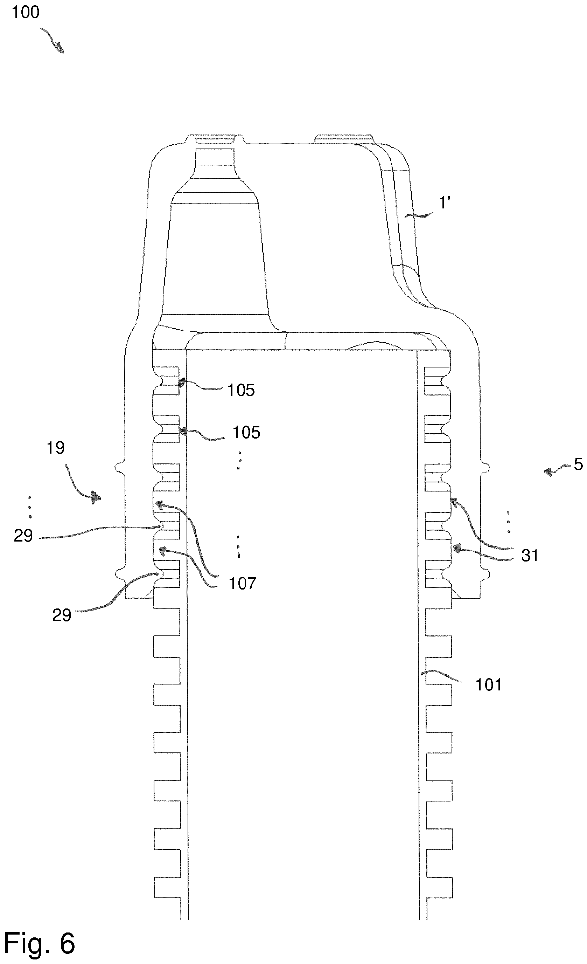

In Fig. 1 ist eine Manschette 1 gemäß einem ersten bevorzugten Ausführungsbeispiel der Erfindung gezeigt. Die Manschette 1 weist einen Grundkörper 3 aus einem elastischen Werkstoff auf, beispielsweise einem Elastomer. An dem Grundkörper 3 ist an einem ersten, in Fig. 1 unteren, Ende ein erster Dichtabschnitt 5 ausgebildet, der zur Aufnahme eines Mantels (101, vgl. Fig. 5, 6) innenseitig ausgebildet ist. An einem gegenüberliegenden, in Fig. 1 oberen Ende des Grundkörpers 3, ist ein Tüllenverbund 7 ausgebildet, der eine Mehrzahl von Tüllen, nämlich eine erste Tülle 7a und eine gegenüberliegend benachbart angeordnete zweite Tülle 7b aufweist. Die Tüllen 7a, 7b des Tüllenverbunds 7 sind aneinander angeformt.

Jede Tülle 7a, 7b weist zur Erhöhung der Formstabilität einen Vorsprung in Form einer Dichtwulst 9 auf, der sich umlaufend um eine Tüllenhaut 11 erstreckt. Die Tüllenhaut 11 ist dazu eingerichtet, von einer Leitung oder einem geeigneten Werkzeug durchdrungen zu werden, so dass die Tülle 7a,7b sich mittels der Dichtwulst 9 fluiddicht an die Leitung anlegen kann. Die Tüllenhaut 11 und die Dichtwulst 9 bilden einen zweiten Dichtabschnitt 12 aus.

Die Tüllen 7a, 7b weisen außenseitig eine konvex geformte Außenkontur 13 auf, wobei die Außenkonturen 13 der Tüllen 7a, 7b stetig ineinander übergehen. Der Übergang wird durch einen konkav geformten Flächenabschnitt 15 gebildet. In diesem Ausführungsbeispiel, das eine gerade Anzahl Tüllen 7a, 7b im Tüllenverbund 7 aufweist, wie exemplarisch anhand von zwei Tüllen 7a, 7b gezeigt, stehen sich jeweils konvexe Flächenabschnitte 13 gegenüber, ebenso wie sich konkave Flächenabschnitte 15 einander gegenüberstehen.

Die Manschette 1 weist an der Außenseite des Grundkörpers 3 optional einen Beschriftungsabschnitt 17 auf, der die Anzahl der Tüllen des Tüllenverbunds 7 sowie den zulässigen Durchmesserbereich für die Aufnahme der Leitungen an der Tüllhaut 11 und der Dichtwulst 9 angibt. Im vorliegenden Ausführungsbeispiel ist die Manschette zur Aufnahme von zwei Leitungen mit einem Durchmesser von jeweils 5 bis 9mm eingerichtet.

Im Bereich des ersten Dichtabschnitts weist die Manschette 1 außenseitig einen Spannabschnitt 19 auf, der an beiden Seiten durch umlaufende Erhebungen 21, 23 begrenzt wird. Der Spannabschnitt 19 ist vorzugsweise dazu eingerichtet, eine Spannschelle oder ähnliches aufzunehmen, um an dem eingeführten Mantel (vgl. Fig. 5, 6) befestigt zu werden und die Dichtwirkung herzustellen oder zu erhöhen.

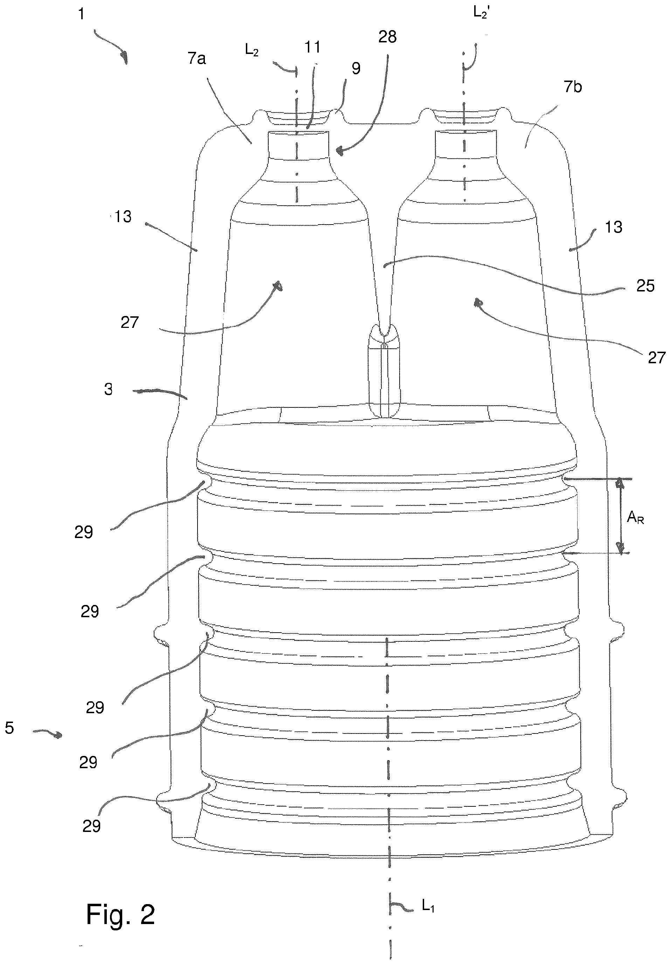

Fig. 2 zeigt eine Schnittdarstellung durch die Manschette 1. Die beiden Tüllen 7a, 7b des Tüllenverbunds 7 weisen jeweils ein inneres Hohlvolumen 27 auf, das außenseitig von dem konvexen Flächenabschnitt 13 und innenseitig von einer gemeinsamen Trennwand 25 begrenzt wird.

Im Bereich der Tüllenhaut 11 und der Dichtwulst 9 weisen die Tüllen 7a, 7b jeweils einen Verjüngungsabschnitt 28 auf, der zum Führen der aufzunehmenden Leitung eingerichtet ist. Die Tüllen 7a, 7b und insbesondere die Führungsabschnitte 28, sind vorzugsweise in Richtung von Längsachsen L2, L2' ausgerichtet, wobei die Längsachsen L2, L2' weiter vorzugsweise parallel zu einer Längsachse L1 des ersten Dichtabschnitts 5 ausgerichtet sind. Aufgrund der Elastizität des Grundkörpers 3 kann es auch zu Abweichungen der Achsenausrichtungen zueinander im montierten Zustand und Betrieb der Manschette 1 kommen.

Im Bereich des ersten Dichtabschnitts 5, der dazu vorgesehen ist, endseitig auf den Mantel (vgl. Figuren 5, 6) aufgeschoben zu werden, weist die Manschette 1 eine Mehrzahl von innenseitig angeordneten Rippen 29 auf, die vorzugsweise umlaufend ausgebildet sind, und die einen axialen Abstand A_{R} zueinander einnehmen. Die Rippen 29 sind dazu eingerichtet, den Mantel im aufgesteckten Zustand kraft- und/oder formschlüssig zu halten.

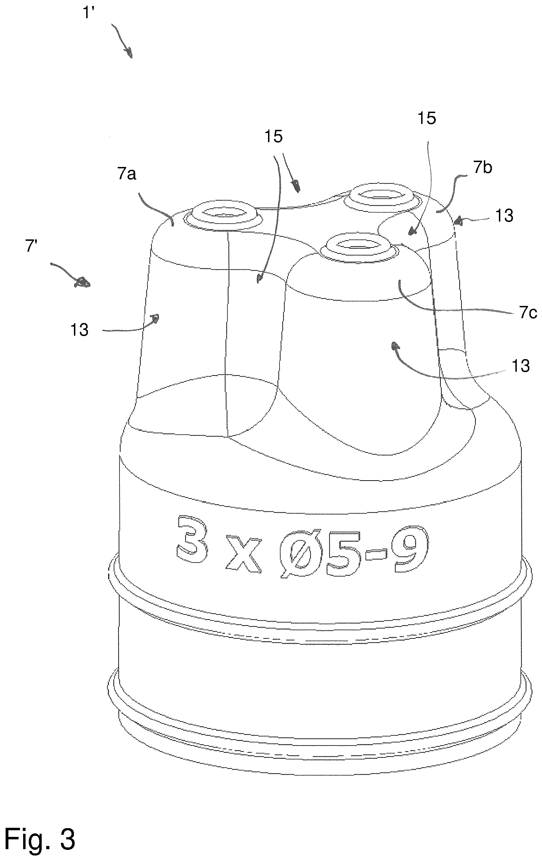

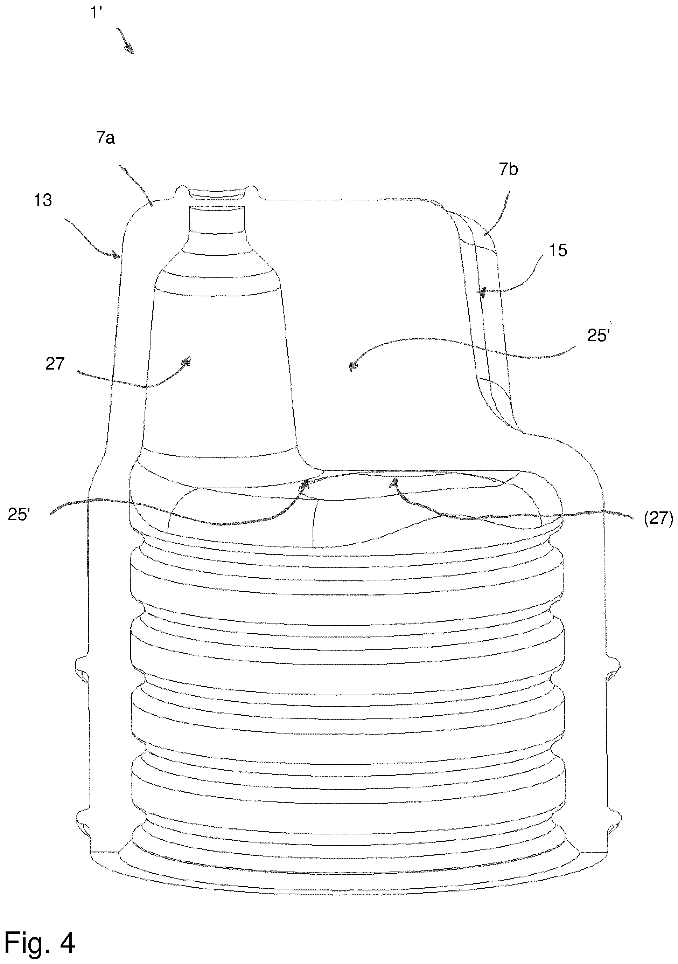

Während das erste Ausführungsbeispiel der Figuren 1 und 2 eine Manschette 1 mit einem Tüllenverbund 7 aus zwei Tüllen 7a, 7b zeigt, zeigt das zweite Ausführungsbeispiel gemäß den Figuren 3 bis 6 eine modifizierte Manschette 1'. Die Manschette 1' ist nach dem gleichen Prinzip aufgebaut wie die Manschette 1 der Figuren 1 und 2, weist aber drei Tüllen 7a, 7b, 7c auf, die ebenfalls aneinander angeformt sind. Die Tüllen 7a, 7b, 7c sind nach dem gleichen Prinzipien konstruiert wie die Tüllen 7a, 7b der Manschette 1 gemäß den Figuren 1 und 2. Sie weisen eine konvexe Außenkontur 13 auf, die jeweils stetig (vgl. obige Definition) über einen konkaven Flächenabschnitt 15 in die Außenkontur 13 der benachbarten Tüllen 7a, 7b, 7c übergehen. Da hier eine ungerade Anzahl von Tüllen im Verbund 7' angeordnet ist, stehen sich jeweils eine Tülle 7a, 7b, 7c auf der einen Seite und ein konkaver Flächenabschnitt 15 auf der anderen Seite gegenüber. Dies führt zu einer etwas anderen Gestaltung der gemeinsamen Trennwände 25' auf der Innenseite, vgl. Fig. 4.

In Fig. 4 ist anschaulich dargestellt, dass sich die gemeinsame Trennwand 25' zwischen zwei benachbarten Hohlvolumina 27 nicht von einem konkaven Flächenabschnitt 15 zum gegenüberliegenden Flächenabschnitt erstreckt, sondern eben von einem konkaven Flächenabschnitt 15 auf der einen Seite bis hin zu einem Hohlvolumen 27 der gegenüberliegenden Tülle 7a, 7b, 7c auf der anderen Seite.

In Fig. 5 und Fig. 6 ist eine Manschettenanordnung 100 an einem Mantel 101 gezeigt. Exemplarisch wird der Mantel 101 mit einer darauf aufgesteckten Manschette 1' gemäß dem Ausführungsbeispiel der Figuren 3 und 4 gezeigt. Genauso gut könnte anstelle der Manschette 1' aber auch die Manschette 1 gemäß der Figuren 1 und 2 auf dem Mantel 101 angeordnet sein. Die Prinzipien sind dieselben, weshalb zur Vermeidung von Wiederholungen auf die Beschreibungen der Figuren 1 bis 4 verweisen wird.

Der Mantel 101 ist als Wellrohr ausgebildet und weist an einer Außenwand 102 eine Vielzahl von Vorsprüngen 103 auf, die vorzugsweise vollständig umlaufend ausgebildet sind. Die Vorsprünge 103 sind alternierend mit zwischen ihnen liegenden Vertiefungen 105 ausgebildet. Die Vertiefungen weisen zueinander einen Abstand Av in Richtung der Längsachse L₁ auf, der in etwa, vorzugsweise exakt, dem Abstand A_{R} der Rippen 29 im ersten Dichtabschnitt 5 der Manschette 1, bzw. 1' ist. Für die Zwecke dieser Beschreibung wird von einem Mantel 101 in geradem, ungestauchtem und nicht gelängtem Zustand ausgegangen.

Der Mantel weist entlang des Umfangs der Vorsprünge 103 jeweils eine Dichtfläche 107 auf, die zur dichtenden Anlage an der Manschette 1 bzw. 1' eingerichtet sind.

Die Anordnung der Rippen 29 in den Vertiefungen 105 des Mantels 101 ist anschaulich in Fig. 6 illustriert. Die Manschette 1' (bzw. auch die Manschette 1) weist eine Mehrzahl beabstandet zueinander angeordneter Dichtflächen 31 auf, die im montierten Zustand der Manschette 1' (bzw. Manschette 1) fluiddicht an den korrespondierenden Dichtflächen 107 des Mantels 101 anliegen.

Durch das Ineinandergreifen der Rippen 29 in die Vertiefungen 105 wird die Manschette 1' (bzw. Manschette 1) wenigstens kraftschlüssig am Mantel 101 gehalten.

In Zusammenschau ergibt sich aus der Diskussion der vorhergehenden Ausführungsbeispiele anschaulich, dass durch das Anformen der Tüllen 7a, 7b bzw. 7a, 7b, 7c aneinander ein geringerer Abstand zwischen den einzelnen Tüllen des Tüllenverbunds 7 realisiert werden kann als bei konventioneller Ausbildung der Tüllen. Dadurch können mehr Tüllen in einem Verbund angeordnet sein, als Einzeltüllen bei gleichbleibendem Manteldurchmesser. Alternativ oder zusätzlich können die Tüllen des Tüllenverbunds einen größeren individuellen Durchmesser haben, das heißt, dass sie zur Aufnahme im Vergleich zu konventionellen Lösungen größerer Leitungsdurchmesser, wiederum bei gleichbleibendem Manteldurchmesser dimensioniert werden können.

### Bezugszeichenliste

- 1, 1': Manschette
- 3: Grundkörper
- 5: Dichtabschnitt
- 7: Tüllenverbund
- 7a, 7b, 7c: Tülle
- 9: Dichtwulst
- 11: Tüllenhaut
- 12: zweiter Dichtabschnitt
- 13: Außenkontur
- 15: Flächenabschnitt
- 17: Beschriftungsabschnitt
- 19: Spannabschnitt
- 21, 23: Erhebung
- 25, 25': Trennwand
- 27: Hohlvolumen
- 28: Verjüngungsabschnitt
- 29: Rippen
- 31: Dichtflächen
- 100: Manschettenanordnung
- 101: Mantel
- 102: Außenwand
- 103, 105, 107: Vorsprünge
- A_{R}: Abstand
- A_{V}: Abstand

## Patentansprüche

1. Manschette (1,1') zum Abdichten einer Leitungsanordnung gegenüber einem Mantel (101), durch welchen die Leitungsanordnung hindurchgeführt ist, wobei die Manschette (1) einen ersten Dichtabschnitt (5) aufweist, der zur fluiddichten, endseitigen Anlage an dem Mantel (101) eingerichtet ist, und mehrere Tüllen (7a,b; 7a,b,c) aufweist, die jeweils einen zweiten Dichtabschnitt (12) aufweisen, der dazu eingerichtet ist, fluiddicht an einer Leitung der Leitungsanordnung anzuliegen,
**dadurch gekennzeichnet, dass** einige oder sämtliche der Tüllen (7a,b; 7a,b,c) als Verbund (7) ausgebildet sind, wobei die Tüllen (7a,b; 7a,b,c) in einem Verbund (7) jeweils aneinander angeformt sind.

2. Manschette (1,1') nach Anspruch 1,
**dadurch gekennzeichnet, dass** der erste Dichtabschnitt (5) und die zweiten Dichtabschnitte (12) des Verbunds (7) axial zueinander beabstandet sind.

3. Manschette (1,1') nach Anspruch 1 oder 2,
**dadurch gekennzeichnet, dass** jede der Tüllen (7a,b; 7a,b,c) ein inneres Hohlvolumen (27) zur Aufnahme einer Leitung aufweist, wobei die Hohlvolumina (27) benachbarter Tüllen (7a,b; 7a,b,c) jeweils mittels einer gemeinsamen Trennwand (25) voneinander getrennt sind.

4. Manschette (1,1') nach einem der vorstehenden Ansprüche,
**dadurch gekennzeichnet, dass** die Tüllen (7a,b; 7a,b,c) jeweils eine geschlossene Tüllenhaut (11) aufweisen, welche dazu eingerichtet ist, mittels der Leitung durchdrungen zu werden und sich vorzugsweise nach erfolgtem Durchdringen fluiddicht an die Leitung anzulegen.

5. Manschette (1,1') nach einem der vorstehenden Ansprüche,
**dadurch gekennzeichnet, dass** der erste Dichtabschnitt (5) eine Anzahl, vorzugsweise Mehrzahl, innenseitig angeordneter Rippen (29) aufweist, die dazu eingerichtet sind, den Mantel (101) kraft- und/oder formschlüssig zu halten.

6. Manschette nach einem der Ansprüche 1 bis 4,
**dadurch gekennzeichnet, dass** der erste Dichtabschnitt (5) eine Anzahl, vorzugsweise Mehrzahl, innenseitig angeordneter, in Umfangsrichtung verteilter Vorsprünge in Form von Steinen oder Warzen aufweist, die dazu eingerichtet sind, den Mantel kraft- und/oder formschlüssig zu halten.

7. Manschette nach einem der vorstehenden Ansprüche,
**dadurch gekennzeichnet, dass** der erste Dichtabschnitt (5) einen außenseitigen Spannabschnitt (19) zur Aufnahme einer Spannvorrichtung aufweist, wobei der erste Dichtabschnitt (5) vorzugsweise eine oder mehrere außenseitig in Umfangsrichtung angeordnete Erhebungen (21,23) aufweist, die den Spannabschnitt (19) definieren.

8. Manschette (1,1') nach einem der Ansprüche 5bis 7,
wobei der Mantel (101) als Wellrohr mit einer Mehrzahl außenseitiger aufeinanderfolgender Vorsprünge (103) mit dazwischen angeordneten Vertiefungen (105) ausgebildet ist, wobei benachbarte Vertiefungen (105) jeweils einen Abstand (Av) zueinander einnehmen.

9. Manschette nach Anspruch 8,
wobei die Rippen (29) einen zu dem Abstand (A_{V}) der Vertiefungen (105) korrespondierenden Abstand (A_{R}) zueinander aufweisen.

10. Manschette nach Anspruch 8,
wobei die Rippen (29) einen Abstand aufweisen, der mit einer Summe von Abständen (Av) mehrerer Vertiefungen (105) korrespondiert.

11. Manschette nach einem der Ansprüche 5 bis 7,
wobei der Mantel als Glattrohr mit einem Endabschnitt und einer dort außenseitig ausgebildeten Vertiefung ausgebildet ist, wobei die Vertiefung zur Aufnahme einer oder mehrerer Rippen (29) oder Vorsprünge ausgebildet ist.

12. Manschette nach einem der Ansprüche 1 bis 4,wobei der erste Dichtabschnitt eine Anzahl, vorzugsweise Mehrzahl, innenseitig angeordneter Vertiefungen (29) aufweist, die dazu eingerichtet sind, den Mantel (101) kraft- und/oder formschlüssig zu halten.

13. Manschette nach Anspruch 12,
wobei der Mantel mit einem Endabschnitt und einer dort außenseitig ausgebildeten Vertiefung ausgebildet ist, oder mit einer Mehrzahl außenseitiger aufeinanderfolgender Vorsprünge mit einer oder mehreren dazwischen angeordneten Vertiefungen (105) ausgebildet ist, wobei benachbarte Vertiefungen (105) jeweils einen Abstand zueinander einnehmen, wobei vorzugsweise die Vertiefung oder Vertiefungen zur Aufnahme einer oder mehrerer Rippen (29) oder Vorsprünge ausgebildet ist oder sind, und/oder wobei vorzugsweise die Vertiefungen einen Abstand aufweisen, der mit einer Summe von Abständen (Av) mehrerer Vorsprünge korrespondiert.

14. Manschette (1,1') nach einem der vorstehenden Ansprüche,
**dadurch gekennzeichnet, dass** die Tüllen (7a,b; 7a,b,c) derart aneinander angeformt sind, dass ihre Außenkontur (13) stetig in die Außenkontur (13) einer benachbarten Tülle (7a,b; 7a,b,c) übergeht, wobei vorzugsweise der Verbund der Tüllen eine alle Tüllen umschließende Umfangsfläche aufweist, welche jeweils im Bereich eines Übergangs von der Außenkontur einer Tülle zu der Außenkontur einer anderen Tülle einen konkaven Flächenabschnitt aufweist.

15. Manschette (1) nach Anspruch 14,
**dadurch gekennzeichnet, dass** die gemeinsame Trennwand (25) sich zwischen zwei konkaven Flächenabschnitten (15) erstreckt,
vorzugsweise zwischen einem konkaven Flächenabschnitt (15) an einem ersten Ende und einem Hohlvolumen (27) einer Tülle (7a,b,c) des Verbunds (7) an einem zweiten Ende.

16. Manschettenanordnung (100) zum Führen einer Leitungsanordnung durch ein Mantel (101) und eine Manschette (1,1') hindurch, umfassend ein Mantel (101) und eine die Leitung gegenüber dem Mantel (101) abdichtende Manschette (1,1'), **dadurch gekennzeichnet, dass** die Manschette (1) nach einem der vorstehenden Ansprüche ausgebildet ist.

17. Verwendung einer Manschette (1,1`) oder einer Manschettenanordnung (100) zum Führen einer Leitungsanordnung in einem Leitungssystem für eines der folgenden:
Wärmepumpe,
Klimaanlage,
Nah- oder Fernwärme,
Heizung,
Kabelbündel, insbesondere Strom-, elektrisches Daten- oder Glasfaserkabelbündel, oder einer Mischkonfektion aus mehreren verschiedenen Leitungen, insbesondere verschiedenen Medien- oder Datenleitungen,
**dadurch gekennzeichnet, dass** die Manschette (1) nach einem der Ansprüche 1 bis 12 ausgebildet ist, oder dass die Manschettenanordnung nach Anspruch 16 ausgebildet ist.
